# EUROPEAN PATENT APPLICATION

(11) **EP 1 199 505 A2**
(43) Date of publication of application: **24.04.2002**
(21) Application number: 01500247.0
(22) Date of filing: 17.10.2001
(51) Int. Cl.: F16L 19/02, F16L 23/02

(54) **Pipe union for multiple type of connections**

(30) Priority: 17.10.2000 ES 200002527 U
(71) Applicant: Estrade Smith, Jorge, 48010 Bilbao (Vizcaya) (ES)
(72) Inventor: Estrade Smith, Jorge, 48010 Bilbao (Vizcaya) (ES)
(74) Representative: Ungria Lopez, Javier

(57) **Abstract**

It permits to equally make connection between these elements by any of the conventional systems known as "flexible automatic joint", "mechanical joint" and "by means of flanges".

To achieve this, one of the connection ends has a flared shape (2) with a trunco-conical portion (4) and another portion being cylindrical (5). A connecting flange (6) formed by two half-rings (20-21) rests on the trunco-conical portion, permitting connection by means of flanges (6, 15) or by mechanical joint (6-11), with the aid of a counter-flange (11), a joint (13, 10) matching said trunco-conical (4) and cylindrical (5) portions being interposed in both cases. For joining by means of flexible automatic joint, the smooth end of the pipe (1) penetrates via the flared mouth (2) exceeding the cavity (8) where a hermetic joint (9) is located.

## Description

### OBJECT OF THE INVENTION

As stated in the title of specification, the present invention refers to a device for joining pipes, accessories, valves and other components of a conduit, rendering notable relevant and advantageous features compared to those currently in existence with an identical purpose and which can be regarded as being of its type.

According to the invention, the connection between different sections of pipe, valves and other accessories is permitted to be equally made by means of connection systems known as "flexible automatic joint", "mechanical joint" and "by means of flanges", in a selective manner. The joining therefore has a multiple utility for being able to make the join by any of these systems, doing so in conduits for fluids (water or any other liquid) including even gas. It therefore has an application in all control and regulation elements and other special parts.

In the specific case of pipe joinings, according to manufacturing standards this is regarded as being made by a spigot or by means of flanges. The spigot connection is made by means of the introduction of the smooth end of a pipe into the flared end of the contiguous pipe, where the sealing joint that will seal the join of the two ends is housed. The connection by means of flanges is made by connecting two equal ends provided with exterior collars, providing a flat intermediate joint which becomes pressed when the peripheral screws and nuts are tightened. These flanges form part of the body of the element or pipe, in other words the ends of it have been moulded in the form of a flange, though the flange can also be a piece separate from the body of the pipe and adapted for fitting to it. These latter flanges are usually split so that they can be fitted to the end of the pipe without difficulty.

### BACKGROUND OF THE INVENTION

Utility Model No. U-9400054 disclosed a system for joining pipes and other accessories and components to be found in a fluid conduit, in which it provided for the connection ends to have a configuration for multiple utility, in other words, so that they could be fitted with different types of connection, both by means of flexible automatic joint and for mechanical joint connection and connection via flanges.

So, even though this is an improved system with respect to that previously known, in which it was necessary to use different models, thereby considerably increasing the number of pieces needed for maintaining a stock that was sufficiently broad in terms of quantity and variety, it nevertheless has certain problems of safety and manufacturing costs, which are eliminated with the improved characteristics that the invention proposes.

In this stated Utility Model, one of the ends of each pipe is finished in the form of a "multiple utility" by offering a flared opening with an internal cavity for the housing of a joint, permitting the smooth end of the contiguous pipe to be plugged in when it is introduced under pressure. This flared opening of the pipe incorporates a bevel in its interior in order to support an exterior joint of cross-section that is triangular in general, which is applied under pressure to its trunco-conical housing by means of a counter-flange secured with screws, thereby producing a spigot with a mechanical joint.

So that the same flared opening can permit the third of the types of connection stated above to be made, namely, the one known as "connection by means of flanges", the free end of the flared finish of the pipe includes an external annular projection by way of an exterior collar for the retention of the actual flange.

### DESCRIPTION OF THE INVENTION

In general terms, although the device for joining pipes, accessories, valves and other components of a conduit which constitutes the object of this invention has a flared end of the pipes with the same multi-functional philosophy as stated above in relation to the aforementioned Utility Model, the opening and walls of the pipe in this zone have been modified in the present invention by including a conical part finished in another cylindrical part of short length. The conical part allows the support of a connecting flange for the case of a join between flanges and also between flange and counter-flange.

In the case of fitting a counter-flange, this presses on a ring joint of trapezoid cross-section, with an oblique side in contact with the conical wall of the pipe in which it is housed, and with another section parallel to the generatrix of the pipe which contacts and matches the cylindrical extension of the pipe. This arrangement facilitates and improves both the coupling and the securing of the joint.

For the case of connection by means of flanges, provision has been made so that the joint used has a central part similar to that of the joint mentioned above in the case of using a counter-flange, but provided with a collar in the external zone that covers the annular edge of the end of the pipe to which it fits. It also has another interior extension, cylindrical in shape and finished in an annular tooth that is located behind a recess made in the flared end of the pipe, this recess lying immediately before the trunco-conical portion for the retention of the flange. The annular tooth achieves the retention of the joint in the mouth.

In turn, the connecting flange that has to be fixed in the trunco-conical portion of the end of the pipe is divided into two parts or half-rings, the ends of which are interconnected together and secured with screws. They include some peripheral holes for the passage of fastening screws between flanges and/or between this flange and a counter-flange.

The counter-flange has an annular configuration, with a section that is cylindrical in general and another that is discoid, the latter being provided with holes for the passage of peripheral fastening screws, which are standard and do not require any specific configuration as the previous technique did, thereby achieving greater simplicity and lower manufacturing costs.

Another improvement that is achieved and which has a notable impact on cutting costs is the reduction in the thickness of the flared shape of the end of the pipes since the thickness of the pipe wall is kept virtually constant, while in the aforementioned Utility Model there existed thickened zones which were machined down afterwards, which increases the cost of the product.

In order to facilitate an understanding of the characteristics of the invention and forming an integral part of this specification, some sheets of plans are attached containing figures which, by way of illustration only rather than being restrictive, represent the following:

### BRIEF DESCRIPTION OF THE DRAWINGS

Figure 1 shows a view in cross-section of a coupling of pipes to a T-connector, which includes the connecting device in accordance with the invention. Each of the three joinings shows respective joining systems: by mechanical joint, flexible automatic joint and by means of flanges.
Figure 2 shows a partial view in cross-section of the flared end of a pipe or connector, the mouth of which has been provided with hermetic joints necessary for making a connection by mechanical joint and by flexible automatic joint, the introduced pipe and the counter-flange provided on the external trunco-conical end of the flared shape being partially shown.
Figure 3 shows a cross-section of the hermetic joint necessary for connection by means of flanges.
Figure 4 shows a plan view of a flange for coupling to the flared end of the pipe, connector or other component of a conduit.
Figure 5 shows a cross-section according to cut A-B of figure 4.

### DESCRIPTION OF THE PREFERRED DESIGN

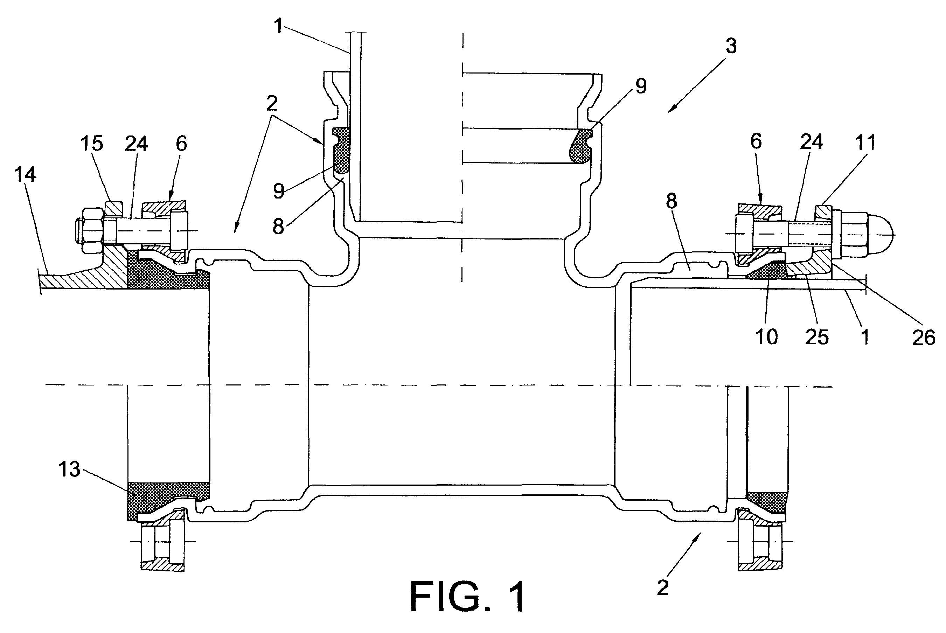

Referring to the numbering adopted in the figures, it can be seen how the device for joining pipes, accessories, valves and other components of a conduit, which the invention proposes, permits connection by means of spigot of the pipe 1 inside the flared mouth 2 which defines the "female" end of the coupling pipes, or mouthpieces of the T-connector referenced in general with number 3 in figure 1.

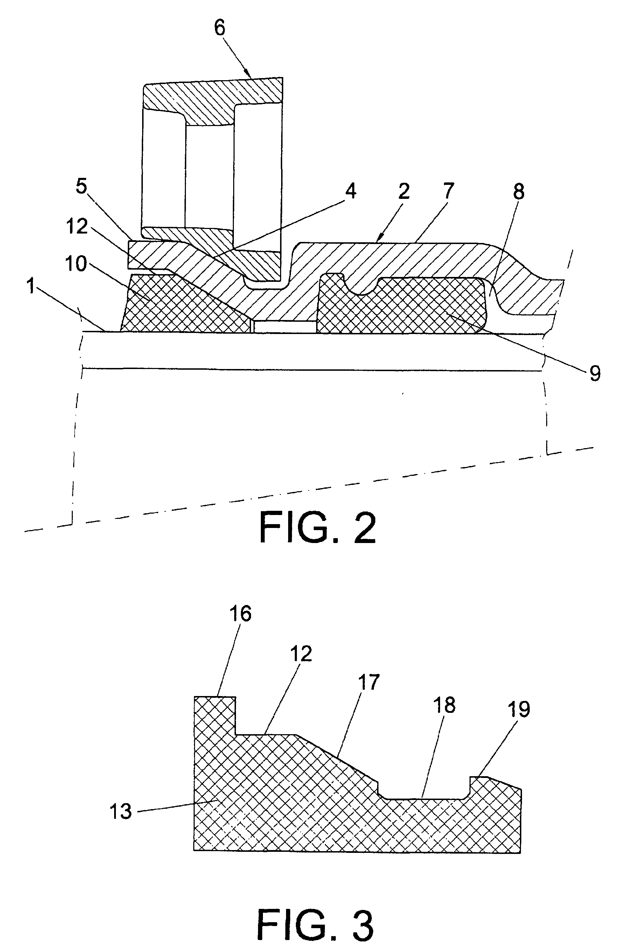

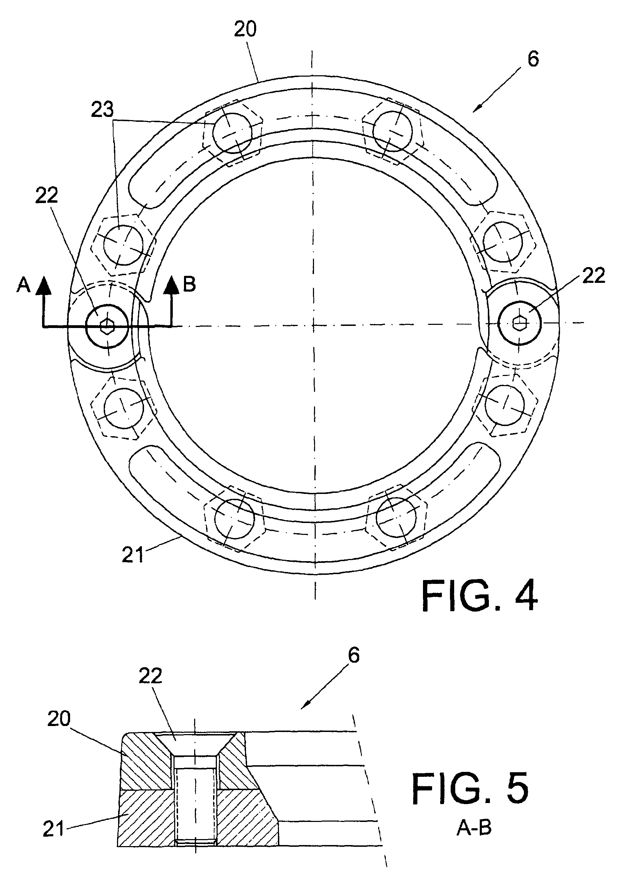

The geometry shown by the flared mouth 2, both inside and out, permits connection of pipes by any of the known systems stated above. As can be seen more clearly in figure 2, the flared end 2 has a trunco-conical portion 4 finished in a cylindrical portion 5. The flange 6, formed in this case from two half-rings connected together, as can be clearly seen in figure 4, rests on the external periphery of the trunco-conical portion 4 and is perfectly retained there. This flange is split both for ease of coupling and so that it can be retained and introduced into the annular depression formed by the recess defined by the larger diameter of the forward part 7 of the flared shape.

The cavity, referenced with number 8 intended to receive the hermetic joint 9 which is hermetically applied against the external wall of the introduced pipe 1, permitting the join by "flexible automatic joint" can be seen inside the flared end 2.

Figure 2 also shows the way in which the hermetic sealing joint 10 is perfectly guided, thus allowing joining by "mechanical joint" with the aid of the counter-flange 11 (see the right-hand part of figure 1), as it will be seen below. This joint 10 has an internal trunco-conical portion matching the conicity shown by the trunco-conical portion 4 of the flared shape, having another exterior end portion that is cylindrical 12 which facilitates and improves both the coupling and the securing of the joint 10 for the funnel shape shown by the end of the flared shape 2.

Figure 3 shows on a larger scale the sealing joint used for joining by means of "mechanical joint", being referenced with number 13. The sealing joint can be seen on the left-hand side of figure 1 fitted to the flared end of the connector 3, making the join of a pipe 14 finished in a flange 15, the collar 16 forming the external end of this joint 13 being interposed. In front of that collar 16 there is a cylindrical portion 12 and another trunco-conical portion 17, both of them matching the internal geometry of the flared end of the outer pipe or "female" finish. The joint 13 is perfectly located and retained in the interior of the flared end by including a cylindrical internal extension 18 ending in an annular tooth 19 positioned behind the recess formed by the most forward wall of the internal cavity 8 of the pipe.

Making special reference now to figures 4 and 5, the structure of the flange 6 is comprised of two half-rings 20 and 21, whose ends are by means of complementary dihedral recesses, with the join being made firm by means of allen screws 22. A plurality of holes 23 for the passage of fastening screws 24 (see figure 1) which are secured with nuts after having passed through another flange 15 or counter-flange 11, depending on the type of join chosen are provided on the perifery of flange 6. These peripheral screws are standard and are easily found on the market.

Observing now the right-hand part of figure 1, namely, the join by means of mechanical joint through the counter-flange 11, it can be seen that this counter flange has an annular configuration with a generaly cylindrical section 25 although somewhat trunco-conical, and a discoid section 26 which defines a collar where holes for the passage of peripheral screws 24 are to be found. The counter-flange 11 presses on the sealing joint 10, the contact surface of both having an oblique arrangement that optimises the seating and the sealing of the joint 10 (see also figure 2).

## Claims

1. Device for joining pipes, accessories, valves and other components of a conduit, permitting connection by means of flexible automatic joint, mechanical joint or via flanges, **characterised in that** one end of a pipe (1), or "female" terminal of a coupling, has a trunco-conical portion (4) finished in a cylindrical portion (5), a connecting flange (6) being arranged on the first portion for establishing a connection via flanges (6, 15) when the other end of the pipe (1) or "female" terminal of the coupling has this end; or a connection by means of mechanical joint via a counter-flange (11), a joint (13, 10) matching at least the conical walls (4) and cylindrical walls (5) of a mouth being interposed in both cases.

2. Device for joining pipes, accessories, valves and other components of a conduit, according to claim 1, **characterised in that** the connecting flange (6) is divided into two portions or half-rings (20-21) whose ends are interconnected by means of complementary dihedral recesses and assembling screws (22) in the zones of overlap, a plurality of holes (23) for the passage of standard peripheral screws for fastening between flanges (6, 15) or to a counter-flange (11) being provided for.

3. Device for joining pipes, accessories, valves and other components of a conduit, according to claim 1, **characterised in that** the joint (13) for connecting between flanges (6-6; 6-11), in addition to a trunco-conical portion (17) and a cylindrical portion (12), has an exterior portion (16) shaping a collar that covers an annular edge of a flared end (2).

4. Device for joining pipes, accessories, valves and other components of a conduit, according to claim 3, **characterised in that** the joint (13) also incorporates an internal cylindrical extension (18) ending in an annular tooth (19) located behind a recess made at the end of the pipe, before the trunco-conical portion (4), for retention of the joint.

5. Device for joining pipes, accessories, valves and other components of a conduit, according to claim 1, **characterised in that** the joint (10) for connection by "mechanical joint" has a trapezoid cross-section that encloses the trunco-conical portion (4) and the cylindrical portion (5) of a mouth (2) of the pipe, the side forming the front wall of the joint (10) on which the counter-flange (11) presses being oblique.

6. Device for joining pipes, accessories, valves and other components of a conduit, according to claims 1 and 2, **characterised in that** the counter-flange (11) is annular, with a generally cylindrical section (25) and a discoid section (26), the latter being provided with holes for passage of standard peripheral screws (24) for fastening.
